# EUROPÄISCHE PATENTSCHRIFT

(11) **EP 2 620 242 B1**
(45) Veröffentlichungstag und Bekanntmachung des Hinweises auf die Patenterteilung: **08.03.2017**
(21) Anmeldenummer: 13000246.2
(22) Anmeldetag: 17.01.2013
(51) Int. Cl.: B23Q 11/04, B23C 3/12, B23Q 17/22, B23B 31/08

(54) **Bearbeitungsvorrichtung für ein zahntechnisches Werkstück**
Processing device for a dental workpiece
Dispositif de traitement pour une pièce à usiner dentaire

(30) Priorität: 30.01.2012 AT 1182012
(43) Veröffentlichungstag der Anmeldung: 31.07.2013
(73) Patentinhaber: STEGER, Heinrich, 39031 Bruneck (IT)
(72) Erfinder: STEGER, Heinrich, 39031 Bruneck (IT)
(74) Vertreter: Torggler & Hofinger Patentanwälte

(56) Entgegenhaltungen:
- DE-A1- 10 354 474
- DE-A1-102007 001 620
- US-A- 1 782 633

## Beschreibung

Die Erfindung betrifft eine Bearbeitungsvorrichtung zum Schleifen, Fräsen, Polieren oder Ähnlichem eines zahntechnischen Werkstücks, mit einem Bearbeitungswerkzeug, einem Gehäuse, an dem das Bearbeitungswerkzeug um eine Drehachse relativ zum Gehäuse drehbar gelagert ist, und einer Haltevorrichtung, an der das Gehäuse befestigt ist. Zudem betrifft die Erfindung eine CAD-CAM-Maschine zur Bearbeitung von zahntechnischen Werkstücken mit einer erfindungsgemäßen Bearbeitungsvorrichtung.

Um Zahnmodelle zu schleifen bzw. zu fräsen, sind in der Dentaltechnik schon seit geraumer Zeit diverse Bearbeitungsvorrichtungen bekannt, die meist vollautomatisch in Abhängigkeit einer Steuer- oder Regeleinheit das Werkstück entsprechend bearbeiten, Meist sind solche Bearbeitungsvorrichtungen auf Traversen einer CAD-CAM-Maschine (computer-aided design bzw. computer-aided manufacturing) angeordnet und sind über diese in X-, Y- und Z-Richtung relativ zum Werkstück bewergbar. Es kann natürlich auch das Werkstück relativ zur Bearbeitungsvorrichtung bewegt werden.

Zu Problemen bei diesen bisher bekannten Bearbeitungsvorrichtungen kann es dann kommen, wenn Fehlbedienungen vorliegen, Gebrechen in einem der Teile der Bearbeitungsvorrichtungen auftreten oder das Werkstück unterschiedlich dichte Stellen aufweist. Es kann unbeabsichtigt ein falscher Schleif- bzw. Fräsvorgang durchgeführt werden, wenn die Position der Bearbeitungsvorrichtung relativ zum Werkstück nicht stimmt bzw. wenn zu viel Druck auf das Werkstück ausgeübt wird.

Eine flexible Halterung eines Bohrers ist aus der US 1,782,633 bekannt. Wenn allerdings zu starker Druck in Achsrichtung auf den Bohrer ausgeübt wird, gibt die Halterung nicht nach. Auch ist die Flexibilität nur um eine Schwenkachse gegeben.

Die Aufgabe der vorliegenden Erfindung besteht daher darin, diese Probleme zu vermeiden. Insbesondere soll ein Zerstören bzw. ungewünschtes Schleifen bzw. Fräsen des Werkstücks durch die Bearbeitungsvorrichtung verhindert werden.

Dies wird für eine Bearbeitungsvorrichtung mit den Merkmalen des Oberbegriffes von Anspruch 1 dadurch erreicht, dass das Gehäuse in Abhängigkeit von auf das Bearbeitungswerkzeug bzw. auf einen Bearbeitungskopf ausgeübten Kräften nachgiebig bewegbar an der Haltevorrichtung gelagert ist, wobei das Gehäuse gegenüber der Haltevorrichtung im Wesentlichen in Richtung der Drehachse bewegbar gelagert ist und wobei das Gehäuse um einen Drehpunkt gegenüber der Haltevorrichtung bewegbar gelagert ist. Die Grundidee besteht somit darin, dass die Bearbeitungsvorrichtung nicht steif wie bei herkömmlichen Fräs- bzw. Schleifmaschinen ist, sondern nachgiebig, also beweglich an der Haltevorrichtung gelagert ist.

Bevorzugt kann für eine solche Haltevorrichtung vorgesehen sein, dass sie einen Halterahmen für das Gehäuse und ein Basiselement, an dem der Halterahmen gelagert ist, aufweist. Dabei kann der Halterahmen eine vordere Halteplatte, eine hintere Halteplatte und eine Trägerplatte aufweisen, an der die beiden Halteplatten befestigt sind.

Wenn vom Werkstück zu starker Druck unter anderem in Achsrichtung auf das Bearbeitungswerkzeug ausgeübt wird, dann gibt das Gehäuse samt Bearbeitungsvorrichtung bevorzugt zumindest in axialer Richtung nach. Dies wird erfindungsgemäß dadurch erreicht, dass das Gehäuse gegenüber der Haltevorrichtung im Wesentlichen in Richtung der Drehachse bewegbar gelagert ist. Besonders bevorzugt ist hierzu vorgesehen, dass der Halterahmen samt Gehäuse gegenüber dem Basiselement von einem Dämpfelement gedämpft in Richtung der Drehachse bewegbar gelagert ist. Somit bildet das Dämpfelement sozusagen ein Rückstellelement, wobei durch das nach Nachlassen des axialen Drucks auf den Bearbeitungskopf bzw. auf das Bearbeitungswerkzeug das Gehäuse samt Halterahmen wieder in die Ausgangsstellung bewegt wird. Dieses Dämpfelement kann pneumatisch, elektrisch, mechanisch oder hydraulisch betrieben werden. Bevorzugt weist dieses Dämpfelement eine Feder auf.

Zusätzlich zur axialen Nachgiebigkeit des Gehäuses samt Bearbeitungswerkzeug ist erfindungsgemäß vorgesehen, dass auch eine Verschwenkung des Gehäuses bei Druckausübung auf den Bearbeitungskopf abweichend von der axialen Richtung ermöglicht wird. Somit lässt sich das Gehäuse samt Bearbeitungskopf bei zu hohem Druck nicht nur um eine Achse verschwenken, sondern um gewisse Grad in alle Richtungen kippen. Dazu ist erfindungsgemäß vorgesehen, dass das Gehäuse um einen Drehpunkt - vorzugsweise mittels eines Kugelgelenks - gegenüber der Haltevorrichtung bewegbar gelagert ist. Das heißt, das Gehäuse ist nicht nur um eine Schwenkachse in nur einer Richtung gegenüber der Haltevorrichtung bzw. am Halterahmen bewegbar gelagert, sondern um einen Drehpunkt in alle Richtungen kippbar. Dadurch kann das Bearbeitungswerkzeug bzw. der Bearbeitungskopf bei Druck aus den verschiedensten, vorzugsweise aus allen, Richtungen nachgeben.

Um keine zu großen Ausschwenk- oder Ausdrehbewegungen zuzulassen, ist bevorzugt vorgesehen, dass das Gehäuse über das Kugelgelenk begrenzt drehbar im Halterahmen der Haltevorrichtung, vorzugsweise in dessen vorderer Halteplatte, gelagert ist. Im Speziellen kann für eine solche Bearbeitungsvorrichtung vorgesehen sein, dass das Kugelgelenk einen im Halterahmen der Haltevorrichtung, vorzugsweise in dessen vorderer Halteplatte angeordneten, Außenring und einen am Gehäuse angeordneten Innenring aufweist, die zueinander korrespondierenden Kugelteiloberflächen aufweisen.

Bevorzugt ist bei einer solchen Rückstellvorrichtung vorgesehen, dass bei nicht axialer Druckausübung auf den Bearbeitungskopf der Bearbeitungskopf samt Gehäuse um den Drehpunkt drehbar ist, wodurch das Gehäuse aus der zentralen Stellung in eine schräge Stellung gegen die Kraft der Rückstellvorrichtung bewegbar ist, und bei unbelastetem Bearbeitungskopf das Gehäuse durch die Rückstellvorrichtung in der zentralen Stellung verbleibt bzw. in die zentrale Stellung bewegbar ist. Nicht axiale Druckausübung heißt dabei, dass vom Werkstück (oder auch von einem anderen Teil einer Maschine) Kraft auch in eine Richtung, die verschieden ist zur Drehachse, auf den Bearbeitungskopf wirkt.

Um nach dem Wegkippen bei nichtaxialer Überlastung auch eine Rückstellung des Gehäuses samt Bearbeitungskopf in die Ausgangslage zu garantieren, ist bevorzugt vorgesehen, dass das Gehäuse über eine, vorzugsweise magnetische, Rückstellvorrichtung bewegbar im Halterahmen, vorzugsweise in dessen hinterer Halteplatte, gelagert ist. Anstatt einer magnetischen Rückstellvorrichtung mit Permanentmagneten können auch Federn eingebaut werden, die das Gehäuse immer wieder in die Ausgangsstellung drücken bzw, ziehen. Anstatt Permanentmagneten können auch elektromagnetische, mechanische, hydraulische und/oder pneumatische Aktuatoren verwendet werden. Die Rückstellung kann auch hydraulisch oder pneumatisch realisiert werden (z.B. über Druckkolben). Auch über federnde Elemente bzw. elastisch verformbare Materialien (z.B. Gummipuffer) kann wieder die Ausgangsstellung eingenommen werden. Die Kraft der Rückstellvorrichtung - und somit die Kraft, ab der eine Verstellung des Gehäuses ausgelöst wird - ist einstellbar.

Grundsätzlich kann die Bearbeitungsvorrichtung verschiedenartige pneumatische oder hydraulische Antriebe aufweisen. Ein Antrieb kann auch durch eine Turbine erfolgen. Bevorzugt ist jedoch vorgesehen, dass am oder im Gehäuse ein Elektromotor zum Antreiben des Bearbeitungskopfs angeordnet ist. Es ist auch möglich, dass der Antrieb der Bearbeitungsvorrichtung "von außerhalb" beispielsweise durch einen Riementrieb erfolgt.

Um die exakte Neigung und/oder axiale Verstellung des Gehäuses zu ermitteln, kann vorgesehen sein, dass im Gehäuse und/oder außerhalb und/oder im Halterahmen zumindest ein Messsensor zum Messen der Stellung, vorzugsweise der Achsneigung, des Gehäuses gegenüber dem Halterahmen angeordnet ist. Durch einen oder mehrere solcher Messsensoren kann die Verstellung bzw. Neigung des Gehäuses in alle Richtungen ermittelt werden. Der Messsensor kann beispielsweise im Halterahmen angeordnet sein und z.B. induktiv, kapazitiv oder optisch den Abstand zu einem gewissen Bereich des Gehäuses ermitteln und dadurch auf die Schrägstellung rückschließen. Diese Messergebnisse können dann an eine übergeordnete Steuer- oder Regeleinheit weitergeleitet werden. In Abhängigkeit dieser Messergebnisse können dann unterschiedliche Steuerprogramme ablaufen, wodurch die Bearbeitungsvorrichtung aus dieser durch Überlastung hervorgerufenen Schrägstellung bzw. axialer Verstellung von der CAD-CAM-Maschine wieder so weit wegbewegt wird, dass der Bearbeitungskopf sich wieder in der zentralen Stellung befindet. Es kann die Bewegung der Bearbeitungsvorrichtung durch die CAD-CAM-Maschine auch so geregelt bzw. gesteuert werden, dass durch größere Auslenkung absichtlich eine höhere Bearbeitungskraft erzielt wird.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen;
- Fig.1: eine dreidimensionale Darstellung einer CAD-CAM-Maschine samt Bea rbeitu ngsvorrichtung,
- Fig. 2: eine dreidimensionale Darstellung der Bearbeitungsvorrichtung,
- Fig. 3: eine Explosionsdarstellung der Bearbeitungsvorrichtung,
- Fig. 4a: einen Schnitt der Bearbeitungsvorrichtung in zentraler Stellung,
- Fig. 4b: einen Schnitt der Bearbeitungsvorrichtung in schräger Stellung,
- Fig. 5a: ein Detail aus Fig, 4a,
- Fig. 5b: ein Detail aus Fig. 4b,
- Fig. 6a: den Schnitt gemäß Fig. 4a samt Basiselement und Dämpfelement und
- Fig. 6b: der Schnitt aus Fig. 4b samt Basiselement und Dämpfelement.

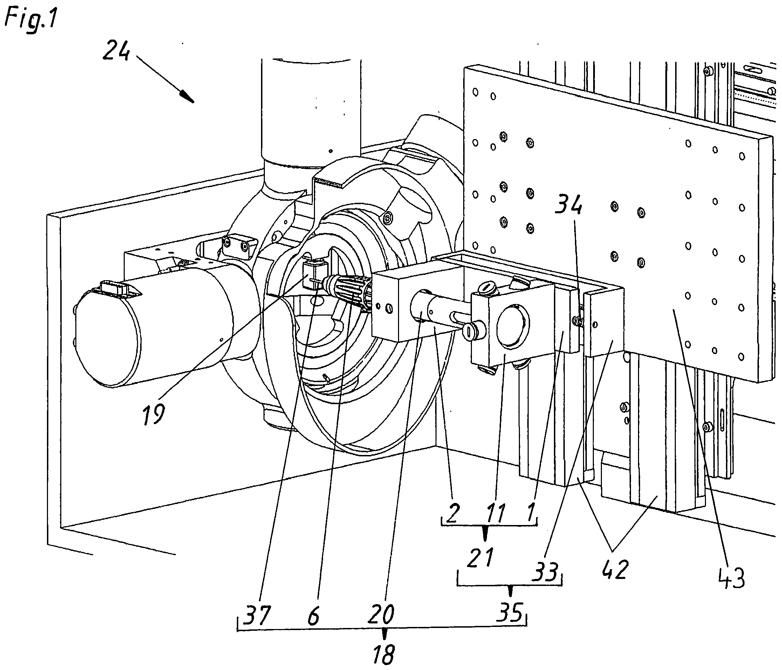

Fig. 1 zeigt generell den Aufbau einer CAD-CAM-Maschine 24 mit Traversen 42 und einer auf den Traversen 42 angebrachten Grundplatte 43. Auf dieser Grundplatte 43 wiederum ist die Bearbeitungsvorrichtung 18 befestigt. Diese Bearbeitungsvorrichtung 18 besteht im Wesentlichen aus dem Bearbeitungskopf 6 samt Bearbeitungswerkzeug 37 (Bohrer, Schleifer, Fräser oder Ähnliches), dem Gehäuse 20 und der Haltevorrichtung 35. Die Haltevorrichtung 35 wiederum weist den Halterahmen 21 (bestehend aus vorderer Halteplatte 2, hinterer Halteplatte 11 und Trägerplatte 1) sowie das Basiselement 33 auf. Über dieses Basiselement 33 ist die gesamte Bearbeitungsvorrichtung 18 an der Grundplatte 43 der CAD-CAM-Maschine 24 befestigt. Das Werkstück 19 ist in einer an sich bekannten Vorrichtung gehalten und wird über das an der Spitze des Bearbeitungskopfs 6 angebrachte Bearbeitungswerkzeug 37 in Abhängigkeit einer nicht dargestellten Steuer- oder Regeleinheit vorzugsweise automatisch bearbeitet.

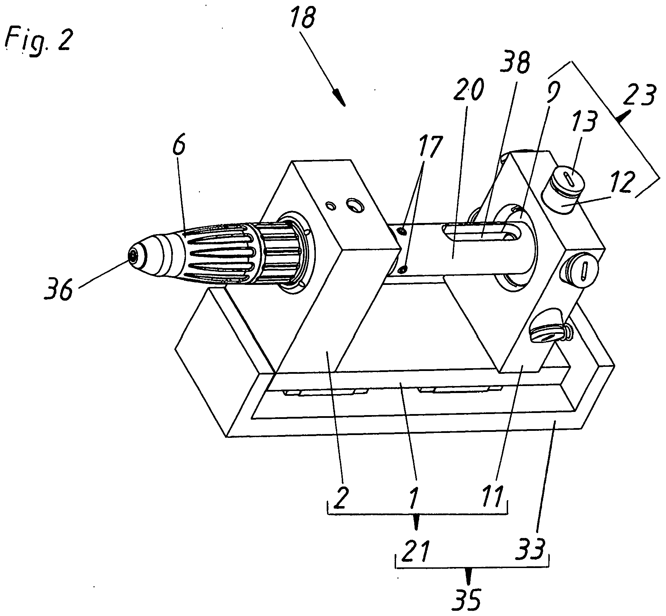

Fig. 2 zeigt die Bearbeitungsvorrichtung 18 mit der an der Spitze des Bearbeitungskopfes 6 erkennbaren Befestigungsvorrichtung 36 für das Bearbeitungswerkzeug 37. Das Gehäuse 20 ist in der hinteren Halteplatte 11 über eine Rückstellvorrichtung 23 nachgiebig bewegbar gelagert. Diese Rückstellvorrichtung 23 weist ein am Gehäuse 20 befestigtes Zentrierelement 9 und in der hinteren Halteplatte 11 angeordneten Magnethülsen 12 samt Verschlusskappen 13 auf. Im Gehäuse 20 ist ein Langloch 38 ausgebildet, über das ein Kabel Strom zu einem im Bearbeitungskopf 6 ausgebildeten Antriebsmotor für das Drehen des Bearbeitungswerkzeugs 37 einleitet.

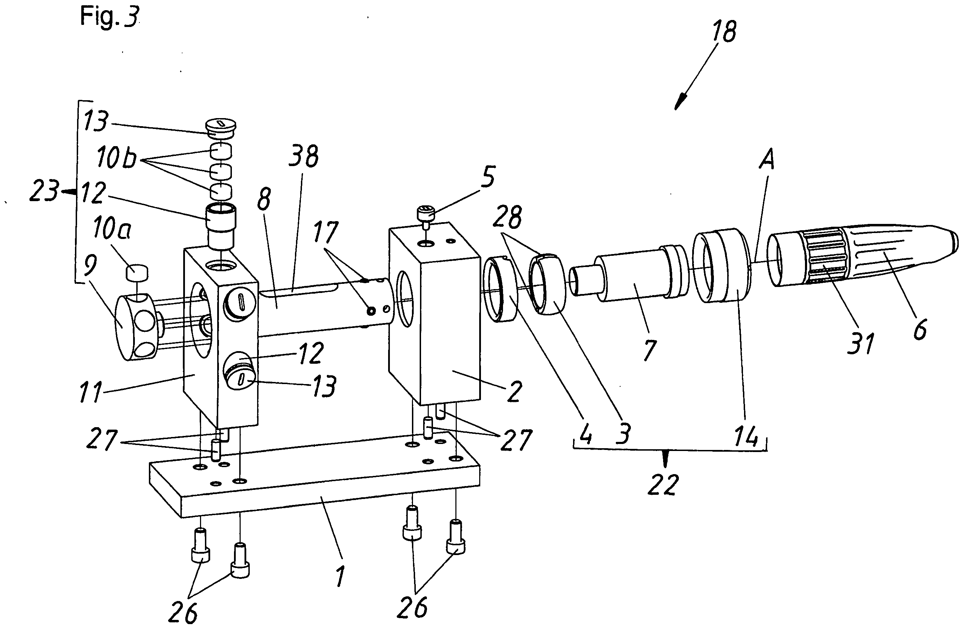

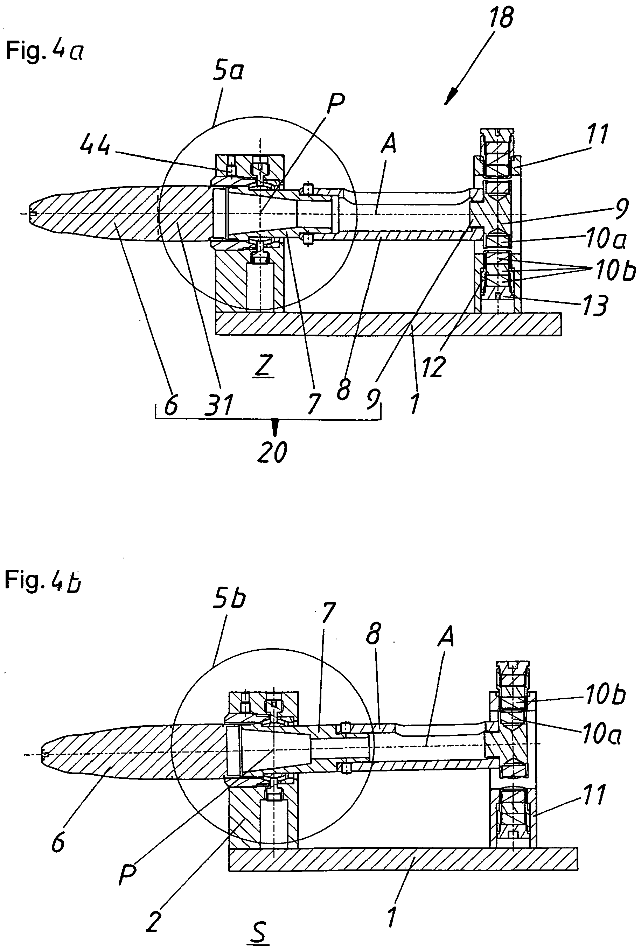

In Fig. 3 ist eine Explosionsdarstellung der Bearbeitungsvorrichtung 18 gezeigt. Der Bearbeitungskopf 6 weist im hinteren Bereich ein Antriebselement 31 auf, von dem das Bearbeitungswerkzeug 37 (auch Spindel genannt) drehbar antreibbar ist. Der Bearbeitungskopf 6 ist Teil des Gehäuses 20 und wird auf einer Aufnahmewelle 7 des Gehäuses 20 fixiert. Auf dieser Aufnahmewelle 7 ist der mit zwei Nuten 28 versehene Innenring 3 fest aufgebracht. Dieser Innenring 3 eines Kugelgelenks 22 wird über die beiden das Kugelgelenk 22 mitbildenden Außenringe 4 und 14 in der vorderen Halteplatte 2 um den Drehpunkt P drehbar gehalten. Um zu gewährleisten, dass sich der Außenring 14 nicht durch Vibrationen oder sonstige Einflüsse löst, wird er radial leicht mit einer Madenschraube 44 (siehe Fig. 4a) in der vorderen Halteplatte 2 geklemmt. Damit sich der Bearbeitungskopf 6 nicht um die Drehachse A des Bearbeitungswerkzeugs 37 drehen lässt, werden in die vordere Halteplatte 2 zwei Verdrehschutzbolzen 5 eingeschraubt, weiche in die Nuten 28 des Innenrings von oben und unten eingreifen. Auf der Aufnahmewelle 7 wird in weiterer Folge noch eine Verlängerungswelle 8 des Gehäuses 20 fixiert. Auf der Rückseite wird dann ein Zentrierelement 9 aufgeschraubt, in welcher sich Magnete 10a befinden. Die gesamte Rückstellvorrichtung 23 ist dabei so konstruiert, dass sich das Zentrierelement 9 mit den darin befindlichen Permanentmagneten 10a genau zentral zwischen weiteren Magneten 10b befindet, welche sich in der hinteren Halteplatte 11 befinden. Diese Permanentmagnete 10b sind in den gleichmäßig um das Zentrierelement 9 angeordneten Magnethülsen 12 eingebracht und werden mit einer Verschlusskappe 13 in die Magnethülse 12 hineingespannt. Über ein Außengewinde auf der Magnethülse 12 kann der Abstand zu den im Zentrierelement 9 befindlichen Magneten 10a richtig ausgerichtet werden. Die beiden Halteplatten 2 und 11 sind auf der Trägerplatte 1 über die Befestigungsstifte 27 verstiftet und über die Befestigungsschrauben 26 befestigt. Die Verlängerungswelle 8 ist über die Innensechskantschrauben 17 an der Aufnahmewelle 7 befestigt.

Der Schnitt von Fig. 4a zeigt das Gehäuse 20 in zentraler Stellung Z. Dabei wird kein Druck über das nicht dargestellte Bearbeitungswerkzeug 37 auf den Bearbeitungskopf 6 ausgeübt, wodurch die Drehachse A parallel zur Trägerplatte 1 ausgerichtet ist. Zudem befindet sich das Zentrierelement 9 mit seinen Magneten 10a in mittiger Position und wird von dem Magneten 10b allseitig in gleicher Weise abgestoßen und somit zentriert.

Demgegenüber befindet sich in Fig. 4b das Gehäuse 20 samt dem Bearbeitungskopf 6 in schräger Stellung S, wobei sich das Gehäuse 20 um den Drehpunkt P des Kugelgelenks 22 bewegt hat. Durch diese Drehung um den halterahmenfixen Drehpunkt P gelangt auch die Rückstellvorrichtung 23 aus seiner zentralen Lage und die Magneten 10a und 10b gelangen an einer Seite näher zusammen. Sobald der Druck auf den Bearbeitungskopf 6 nachlässt, stoßen sich die Magnete 10a und 10b wieder ab und das Zentrierelement 9 samt dem gesamten Gehäuse 20 gelangt wieder in die zentrale Stellung Z gemäß Fig. 4a.

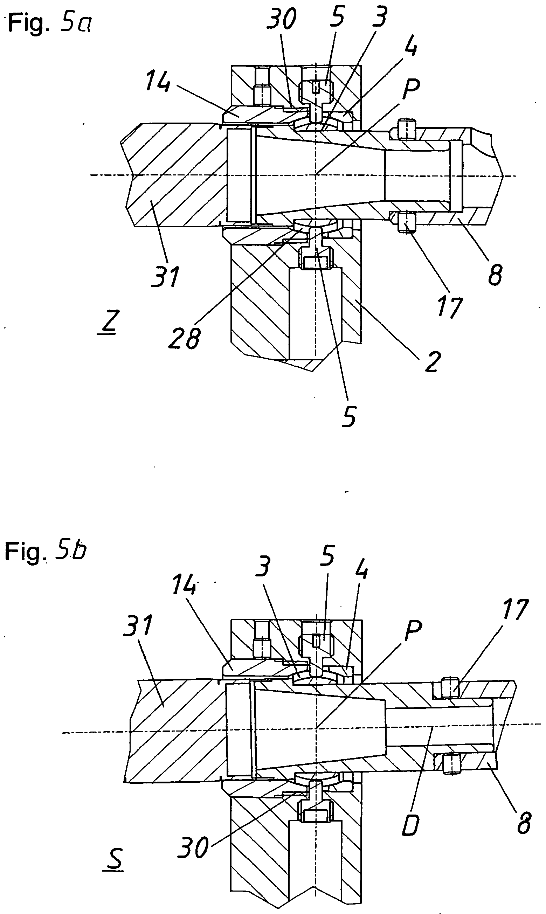

In Fig. 5a ist im Detail der Bereich des Kugelgelenks 22 in der vorderen Halteplatte 2 gezeigt. Der Außenring 14 ist über das Gewinde 30 in der Halteplatte 2 verschraubt. Der Innenring 3 liegt über seine konvexe Kugelteiloberfläche an den konkaven Kugelteiloberflächen der Außenringe 14 und 4 an. Der Verdrehschutzbolzen 5 greift in die Nuten 28 im Innenring 3 ein, wodurch eine begrenzte Drehung des Innenringes 3 samt Gehäuse 20 um den Drehpunkt P ermöglicht wird.

Diese Drehung um den Drehpunkt P ist in Fig. 5b dargestellt, wobei eine maximale Verdrehung um den Drehpunkt P von allseitig zumindest 0,1 Grad erlaubt ist. Es kann auch vorgesehen sein, dass eine Verdrehung um den Drehpunkt P von über 30 Grad und sogar bis zu 90 Grad möglich ist. Vorzugsweise ist durch das Kugelgelenk 22 eine allseitige Verdrehung um den Drehpunkt zwischen 0,5 und 4 Grad möglich. Bevorzugt kann die Drehachse D um ca. 2 Grad in allen Richtungen um den Drehpunkt P bewegt werden (Die maximalen Stellungen bzw. Ausschwenkwinkel der Drehachse A beschreiben somit einen Kegel mit einer um 2° geneigten Mantelfläche.). Die maximale Nachgiebigkeit ist dabei einerseits durch den Spielraum zwischen Bearbeitungskopf 6 und Außenring 14 bzw. andererseits durch die Maximalstellungen der Rückstellvorrichtung 23 begrenzt.

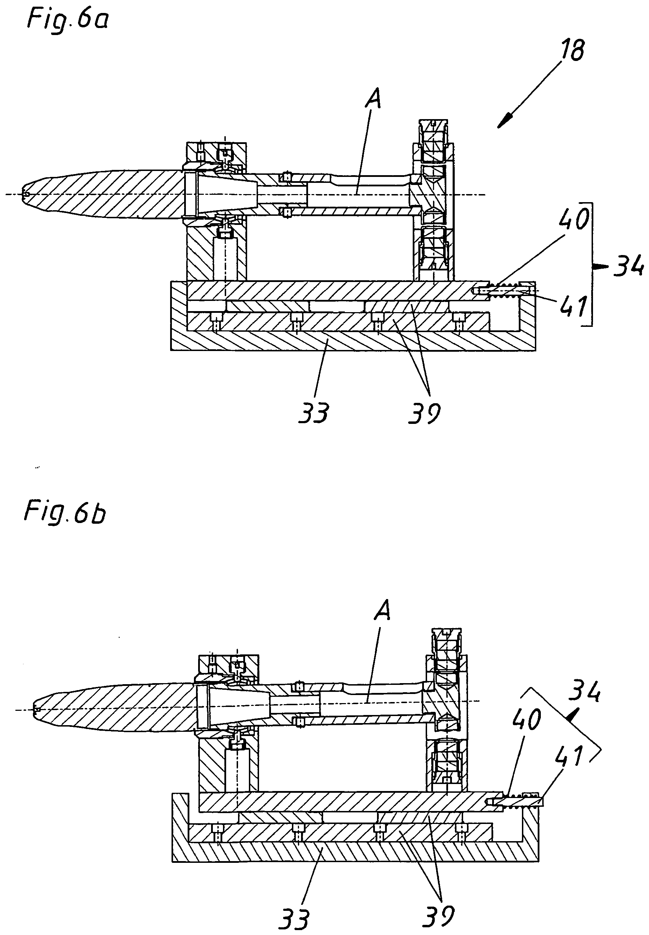

In Fig. 6a ist ein Schnitt durch die Bearbeitungsvorrichtung 18 mitsamt Basiselement 33 gezeigt. An diesem Basiselement 33 der Haltevorrichtung 35 ist über, vorzugsweise Schienen aufweisende, Führungselemente 39 die Trägerplatte 1 des Halterahmens 21 parallel zur Drehachse A bewegbar, vorzugsweise verschiebbar, gelagert.

Wenn nun auf das Bearbeitungswerkzeug 37 auch in Richtung der Drehachse A Druck ausgeübt wird, bewegt sich das Gehäuse 20 samt Halterahmen 21 relativ zur Basisplatte 33. Dabei wird das Dämpfelement 34 zusammengedrückt (siehe Fig. 6b). Sobald der Druck auf den Bearbeitungskopf 6 wieder nachlässt, kann sich die Feder 40 des Dämpfelements 34 wieder entlang des Führungsbolzens 41 ausdehnen und bewegt den gesamten Halterahmen 21 samt Gehäuse 20 wieder in die Ausgangsstellung gemäß Fig. 6a.

Somit ist durch diese Erfindung eine Bearbeitungsvorrichtung 18 zum Schleifen oder Fräsen von zahntechnischen Werkstücken 19 gezeigt, bei der Fehlbearbeitungen des Werkstückes 19 dadurch vermieden werden können, dass das Gehäuse 20 nachgiebig an der Haltevorrichtung 35 der Bearbeitungsvorrichtung 18 bewegbar gelagert ist.

## Patentansprüche

1. Bearbeitungsvorrichtung (18) zum Schleifen, Fräsen, Polieren oder Ähnlichem eines zahntechnischen Werkstücks (19), mit
- einem Bearbeitungswerkzeug (37),
- einem Gehäuse (20), an dem das Bearbeitungswerkzeug (37) um eine Drehachse (A) relativ zum Gehäuse (20) drehbar gelagert ist, und
- einer Haltevorrichtung (35), an der das Gehäuse (20) befestigt ist,
**dadurch gekennzeichnet, dass** das Gehäuse (20) in Abhängigkeit von auf das Bearbeitungswerkzeug (37) ausgeübten Kräften nachgiebig bewegbar an der Haltevorrichtung (35) gelagert ist, wobei das Gehäuse (20) gegenüber der Haltevorrichtung (35) im Wesentlichen in Richtung der Drehachse (A) bewegbar gelagert ist und wobei das Gehäuse (20) um einen Drehpunkt (P) gegenüber der Haltevorrichtung (35) bewegbar gelagert ist.

2. Bearbeitungsvorrichtung nach Anspruch 1, **dadurch gekennzeichnet, dass** die Haltevorrichtung (35) einen Halterahmen (21) für das Gehäuse (20) und ein Basiselement (33), an dem der Halterahmen (21) gelagert ist, aufweist.

3. Bearbeitungsvorrichtung nach Anspruch 2, **dadurch gekennzeichnet, dass** der Halterahmen (21) eine vordere Halteplatte (2), eine hintere Halteplatte (11) und eine Trägerplatte (1) aufweist, an der die beiden Halteplatten (2, 11) befestigt sind.

4. Bearbeitungsvorrichtung nach Anspruch 2 oder 3, **dadurch gekennzeichnet, dass** der Halterahmen (21) samt Gehäuse (20) gegenüber dem Basiselement (33) von einem Dämpfelement (34) gedämpft in Richtung der Drehachse (A) bewegbar gelagert ist.

5. Bearbeitungsvorrichtung nach Anspruch 1 oder 2, **dadurch gekennzeichnet. dass** das Gehäuse (20) mittels eines Kugelgelenks (22) um den Drehpunkt (P) bewegbar gelagert ist.

6. Bearbeitungsvorrichtung nach Anspruch 5, **dadurch gekennzeichnet, dass** das Gehäuse (20) über das Kugelgelenk (22) begrenzt drehbar im Halterahmen (21) der Haltevorrichtung (35), vorzugsweise in dessen vorderer Halteplatte (2), gelagert ist.

7. Bearbeitungsvorrichtung nach Anspruch 6, **dadurch gekennzeichnet, dass** das Kugelgelenk (22) einen im Halterahmen (21) der Haltevorrichtung (35), vorzugsweise in dessen vorderer Halteplatte (2) angeordneten, Außenring (4, 14) und einen am Gehäuse (20) angeordneten Innenring (3) aufweist, die zueinander korrespondierenden Kugelteiloberflächen aufweisen.

8. Bearbeitungsvorrichtung nach einem der Ansprüche 2 bis 7, **dadurch gekennzeichnet, dass** das Gehäuse (20) über eine, vorzugsweise magnetische, Rückstellvorrichtung (23) bewegbar im Halterahmen (21), vorzugsweise in dessen hinterer Halteplatte (11), gelagert ist.

9. Bearbeitungsvorrichtung nach Anspruch 8, **dadurch gekennzeichnet, dass** bei unbelastetem Bearbeitungswerkzeug (37) das Gehäuse (20) durch die Rückstellvorrichtung (23) in einer zentralen Stellung (Z) im Halterahmen (21) gehalten ist.

10. Bearbeitungsvorrichtung nach Anspruch 9, **dadurch gekennzeichnet, dass** bei nicht axialer Druckausübung auf das Bearbeitungswerkzeug (37) das Bearbeitungswerkzeug (37) samt Gehäuse (20) um den Drehpunkt (P) drehbar ist, wodurch das Gehäuse (20) aus der zentralen Stellung (Z) in eine schräge Stellung (S) gegen die Kraft der Rückstellvorrichtung (23) bewegbar ist, und bei unbelastetem Bearbeitungswerkzeug (37) das Gehäuse (20) durch die Rückstellvorrichtung (23) in der zentralen Stellung (Z) verbleibt bzw. in die zentrale Stellung (Z) bewegbar ist.

11. Bearbeitungsvorrichtung nach einem der Ansprüche 1 bis 10, **dadurch gekennzeichnet, dass** in einem Bearbeitungskopf (6) des Gehäuses (20) ein Elektromotor zum Antreiben des Bearbeitungswerkzeugs (37) angeordnet ist.

12. Bearbeitungsvorrichtung nach einem der Ansprüche 2 bis 11, **dadurch gekennzeichnet, dass** im Gehäuse (20) und/oder im Halterahmen (21) zumindest ein Messsensor zum Messen der Achsneigung des Gehäuses (20) gegenüber dem Halterahmen (21) angeordnet ist.

13. CAD-CAM-Maschine (24) zur Bearbeitung von zahntechnischen Werkstücken (19) mit einer Bearbeitungsvorrichtung (18) nach einem der Ansprüche 1 bis 12.

## Claims

1. A machining apparatus (18) for grinding, milling, polishing or the like of a dental workpiece (19), comprising
- a machining tool (37),
- a housing (20) to which the machining tool (37) is mounted rotatably about an axis of rotation (A) relative to the housing (20), and
- a holding device (35) to which the housing (20) is fixed,
**characterised in that** the housing (20) is mounted yieldingly movably to the holding device (35) in dependence on forces exerted on the machining tool (37), wherein the housing (20) is mounted movably with respect to the holding device (35) substantially in the direction of the axis of rotation (A) and wherein the housing (20) is mounted movably with respect to the holding device (35) about a pivot point (P).

2. A machining apparatus according to claim 1 **characterised in that** the holding device (35) has a holding frame (21) for the housing (20) and a base element (33) to which the holding frame (21) is mounted.

3. A machining apparatus according to claim 2 **characterised in that** the holding frame (21) has a front holding plate (2), a rear holding plate (11) and a carrier plate (1) to which the two holding plates (2, 11) are fixed.

4. A machining apparatus according to claim 2 or 3 **characterised in that** the holding frame (21) together with the housing (20) is mounted movably in the direction of the axis of rotation (A) with respect to the base element (33) damped by a damping element (34).

5. A machining apparatus according to claim 1 or claim 2 **characterised in that** the housing (20) is mounted movably about a pivot point (P) by means of a ball joint (22).

6. A machining apparatus according to claim 5 **characterised in that** the housing (20) is mounted limitedly rotatably by way of the ball joint (22) in the holding frame (21) of the holding apparatus (35), preferably in the front holding plate (2) thereof.

7. A machining apparatus according to claim 6 **characterised in that** the ball joint (22) has an outer ring (4) arranged in the holding frame (21) of the holding device (35), preferably in the front holding plate (2) thereof, and an inner ring (3) arranged on the housing (20), which rings have mutually corresponding ball surface portions.

8. A machining apparatus according to one of claims 2 to 7 **characterised in that** the housing (20) is mounted movably in the holding frame (21), preferably in the rear holding plate (11) thereof, by way of a preferably magnetic return device (23).

9. A machining apparatus according to claim 8 **characterised in that** when the machining tool (37) is unloaded the housing (20) is held in a central position (Z) in the holding frame (21) by the return device (23).

10. A machining apparatus according to claim 9 **characterised in that** when no axial force is exerted on the machining tool (37) the machining tool (37) is rotatable together with the housing (20) about the pivot point (P) whereby the housing (20) is movable from the central position (Z) into an inclined position (S) against the force of the return device (23) and when the machining tool (37) is unloaded the housing (20) remains in the central position or is movable into the central position by the return device (23).

11. A machining apparatus according to one of claims 1 to 10 **characterised in that** an electric motor for driving the machining tool (37) is arranged in a machining head (6) of the housing (20).

12. A machining apparatus according to one of claims 2 to 11 **characterised in that** at least one measuring sensor for measuring the axis inclination of the housing (20) relative to the holding frame (21) is arranged in the housing and/or in the holding frame (21).

13. A CAD-CAM machine (24) for machining dental workpieces (19) with a machining apparatus (18) according to one of claims 1 to 12.

## Revendications

1. Dispositif d'usinage (18) servant à poncer, fraiser, polir ou autre une pièce (19) à usage dentaire (19), comprenant :
- un outil d'usinage (37) ;
- un boîtier (20), au niveau duquel l'outil d'usinage (37) est monté de manière à pouvoir tourner autour d'un axe de rotation (A) par rapport au boîtier (20) ;
- un dispositif de maintien (35), au niveau duquel le boîtier (20) est fixé,
**caractérisé en ce que** le boîtier (20) est logé au niveau du dispositif de maintien (35) de manière à pouvoir être déplacé avec flexibilité en fonction des forces exercées sur l'outil d'usinage (37), dans lequel le boîtier (20) est monté de manière à pouvoir être déplacé par rapport au dispositif de maintien (35) sensiblement en direction de l'axe de rotation (A) et dans lequel le boîtier (20) est monté de manière à pouvoir être déplacé autour d'un point de rotation (P) par rapport au dispositif de maintien (35).

2. Dispositif d'usinage selon la revendication 1, **caractérisé en ce que** le dispositif de maintien (35) présente un cadre de maintien (21) pour le boîtier (20) et un élément de base (33), au niveau duquel le cadre de maintien (21) est logé.

3. Dispositif d'usinage selon la revendication 2, **caractérisé en ce que** le cadre de maintien (21) présente une plaque de maintien (2) avant, une plaque de maintien (11) arrière et une plaque de support (1), au niveau de laquelle les deux plaques de maintien (2, 11) sont fixées.

4. Dispositif d'usinage selon la revendication 2 ou 3, **caractérisé en ce que** le cadre de maintien (21) y compris le boîtier (20) est logé de manière à pouvoir tourner par rapport à l'élément de base (33), en étant amorti par un élément d'amortissement (34), en direction de l'axe de rotation (A).

5. Dispositif d'usinage selon la revendication 1 ou 2, **caractérisé en ce que** le boîtier (20) est monté de manière à pouvoir être déplacé, au moyen d'une articulation à rotule (22), autour du point de rotation (P).

6. Dispositif d'usinage selon la revendication 5, **caractérisé en ce que** le boîtier (20) est monté par l'intermédiaire de l'articulation de rotule (22), de manière à pouvoir tourner de manière limitée, dans le cadre de maintien (21) du dispositif de maintien (35), de préférence dans la plaque de maintien (2) avant dudit cadre de maintien.

7. Dispositif d'usinage selon la revendication 6, **caractérisé en ce que** l'articulation à rotule (22) présente une bague extérieure (4, 14) disposée dans le cadre de maintien (21) du dispositif de maintien (35), de préférence dans la plaque de maintien (2) avant dudit cadre de maintien, et une bague intérieure (3) disposée au niveau du boîtier (20), lesquelles présentent des surfaces partielles sphériques correspondant les unes aux autres.

8. Dispositif d'usinage selon l'une quelconque des revendications 2 à 7, **caractérisé en ce que** le boîtier (20) est monté dans le cadre de maintien (21), de préférence dans la plaque de maintien (11) arrière de ce dernier, de manière à pouvoir être déplacé par l'intermédiaire d'un dispositif de rappel (23) de préférence magnétique.

9. Dispositif d'usinage selon la revendication 8, **caractérisé en ce que** lorsque l'outil d'usinage (37) n'est pas soumis à une contrainte, le boîtier (20) est maintenu par le dispositif de rappel (23) dans une position centrale (Z) dans le cadre de maintien (21).

10. Dispositif d'usinage selon la revendication 9, **caractérisé en ce que** lorsque la pression appliquée sur l'outil d'usinage (37) n'est pas axiale, l'outil d'usinage (37) y compris le boîtier (20) peut être tourné autour du point de rotation (P), ce qui permet de déplacer le boîtier (20) hors de la position centrale (Z) dans une position oblique (S) dans le sens opposé à la force du dispositif de rappel (23), et **en ce que** lorsque l'outil d'usinage (37) n'est pas soumis à une contrainte, le boîtier (20) reste dans la position centrale ou peut être déplacé dans la position centrale (Z) grâce au dispositif de rappel (23).

11. Dispositif d'usinage selon l'une quelconque des revendications 1 à 10, **caractérisé en ce qu'**un moteur électrique servant à entraîner l'outil d'usinage (37) est disposé dans une tête d'usinage (6) du boîtier (20).

12. Dispositif d'usinage selon l'une quelconque des revendications 2 à 11, **caractérisé en ce qu'**au moins un capteur de mesure servant à mesurer l'inclinaison axiale du boîtier (20) par rapport au cadre de maintien (21) est disposé dans le boîtier (20) et/ou dans le cadre de maintien (21).

13. Machine CAO/FAO (24) servant à usiner des pièces (19) à usage dentaire à l'aide d'un dispositif d'usinage (18) selon l'une quelconque des revendications 1 à 12.
